(19) Europäisches Patentamt / European Patent Office / Office européen des brevets

(11) **EP 3 156 287 A1**

(12) **EUROPEAN PATENT APPLICATION**
published in accordance with Art. 153(4) EPC

(43) Date of publication:
**19.04.2017 Bulletin 2017/16**

(21) Application number: **15807417.9**

(22) Date of filing: **22.01.2015**

(51) Int Cl.:
**B60R 19/04** (2006.01)

(86) International application number:
**PCT/JP2015/051741**

(87) International publication number:
**WO 2015/190122 (17.12.2015 Gazette 2015/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2014 JP 2014120658**

(71) Applicant: **Toyoda Iron Works Co., Ltd.**
**Toyota-shi**
**Aichi 471-8507 (JP)**

(72) Inventor: **KAMIYA Naoki**
**Toyota-shi**
**Aichi 471-8507 (JP)**

(74) Representative: **Wills, Andrew Jonathan et al**
**Mewburn Ellis LLP**
**City Tower**
**40 Basinghall Street**
**London EC2V 5DE (GB)**

(54) **STRUCTURAL MEMBER FOR AUTOMOBILE**

(57) The present invention aims to improve flexural strength of car structural members, such as bumper reinforcements, having an M-shaped cross section. In a car structural member of the present invention, the outer walls (42) of the two ridges (32, 34) have steps (44) and therefore have increased rigidity, while inner walls (40) of the ridges (32, 34) are flat and therefore have a lower rigidity. This restrains widening deformation of the outer walls (42) when impact forces are applied from the side into which the ridges (32, 34) project in the event of a vehicle collision. The outer walls (42) are deflected without being widened under a larger load. The car structural member thus has an improved flexural strength.

FIG. 4

**Description**

TECHNICAL FIELD

The present invention relates to car structural members, and more particularly to techniques for improved flexural strength against external impact forces.

BACKGROUND ART

A car structural member is known in the art (a) manufactured from a single metal sheet and having a length, (b) the structural member comprising a pair of ridges with a valley floor therebetween, and flanges at the outer ends of the ridges so that the structural member generally has a substantially M-shaped cross section perpendicular to the length, (c) wherein the structural member is disposed on a car in such an attitude that the ridges project outward, and wherein the member is supported at its end sections of the length by the car. A bumper reinforcement described in Patent Document 1 is an example of such a car structural member. This bumper reinforcement has functions to receive external impact forces and to absorb and reduce impact by bending or other deformation.

Related Art Documents

Patent Documents

Patent Document 1: Japanese Patent Application Publication No. 2007-38756
Patent Document 2: Japanese Patent Application Publication No. 2004-9917

SUMMARY OF THE INVENTION

Problem to be Solved by the Invention

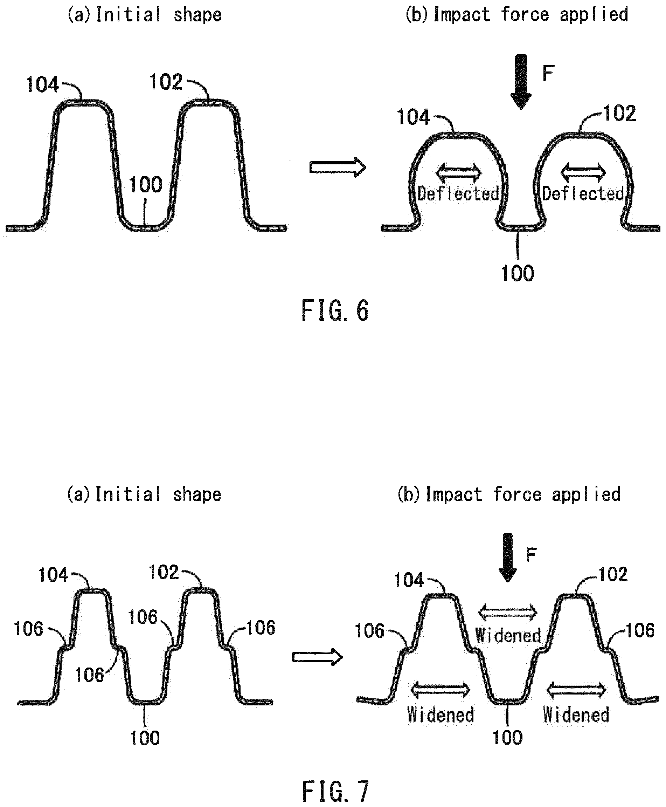

FIG 6(a) shows an example of a cross-section of such a conventional bumper reinforcement, which has a pair of ridges 102, 104 symmetric with respect to a valley floor 100. For example, when an impact force F is applied from the side into which the ridges 102, 104 project in the event of a vehicle collision, the ridges 102, 104 is sometimes deflected so that their walls are curved outward as shown in FIG 6(b), and desired flexural strength cannot be obtained. Such deflection will not occur if the yield stress $\sigma$ satisfies the relation given by Inequality (1) below, where b is the length of the walls of the ridges 102, 104 and t is the thickness of the ridges 102, 104. However, if the thickness t is reduced for reducing the weight, Equation (1) might not hold any more, resulting in deflection under a lower load. In Equation (1), k is the buckling coefficient, v is the Poisson's ratio, and E is the Young's modulus.

$$\sigma \leq k[(\pi^2 E)/12(1-v^2)][1/(b/t)^2] \quad \dots (1)$$

Patent Document 2 proposes a bumper reinforcement having a substantially U-shaped cross section, in which a pair of walls of the U-shape have a step in order to ensure rigidity and restrain buckling. This technique can be applied to a bumper reinforcement having an M-shaped cross section by, for example, including a step 106 in both walls of each of the ridges 102, 104 as shown in FIG 7(a). This configuration increases the rigidity of the walls of the ridges 102, 104 and thereby restrain the walls from deflection.

Although restraining deflection of the walls under a low load, the step 106 in the walls of the ridges 102, 104 causes the walls to be widened outward as shown in FIG 7(b). Forces are scattered accordingly, and flexural strength is not sufficiently improved.

The present invention has been developed in view of the above circumstances and aims to improve flexural strength of car structural members having an M-shaped cross section such as a bumper reinforcement.

Means for Solving the Problem

In order to achieve the above object, the present invention in a first aspect provides a car structural member, (a) manufactured from a single metal sheet and having a length, (b) the structural member comprising a pair of ridges with a valley floor therebetween, and flanges at the outer ends of the ridges so that the structural member generally has a substantially M-shaped cross section perpendicular to the length, (c) wherein the structural member is disposed on a car in such an attitude that the ridges project outward, and wherein the member is supported at its end sections of the length by the car.

"Substantially M-shaped" refers to the shape such that the depth d of the valley floor is in the range of 30-100% of the height H, or the larger of the heights, of the two ridges. The depth d of the valley floor needs only to be in the range of 30-100% at least in a middle section of the length. The M-shaped cross section with the depth d less than 30% of the height H could not appropriately improve the flexural strength.

In a second aspect, the invention provides the car structural member of the first aspect, characterized in that for each of the ridges, a tilt angle $\alpha_1$ of an higher section of the outer wall with respect to the step and a tilt angle $\alpha_2$ of a lower section of the outer wall with respect to the step are in the range of 0° to 20°, where said tilt angles are defined as positive if the outer wall is tilted inward toward the tops of the ridges.

In a third aspect, the invention provides the car structural member of the first or second aspect, characterized in that the cross section is symmetric with respect to the valley floor, and at least in the middle section of the length the valley floor lies at a depth d in a range corresponding to 45-100% of the height H of the ridges.

In a fourth aspect, the invention provides the car structural member of any one of the first to third aspects, characterized in that the car structural member is a bumper reinforcement, and has a curvature such that the car structural member is curved in the middle section of the length toward the outside of the car.

Effects of the Invention

In such a car structural member, the outer walls of the ridges have the step and therefore have increased rigidity, while the inner walls of the ridges are flat and therefore have a lower rigidity. This difference in rigidity between the inner and outer walls restrains widening deformation of the outer walls, and thus the outer walls are deflected without being widened under a larger load. The car structural member thus has an improved flexural strength. In contrast, in the structural member of FIG 7, the walls adjacent to the valley floor 100 (the inner walls) have as high rigidity as the outer walls. This would induce deformation that the walls are widened outward, the walls acting as props. The walls are therefore widened before being deflected under a high load.

In the second aspect of the invention, since the tilt angles $\alpha_1$, $\alpha_2$ of the outer walls of the ridges are both in the range of 0-20°, the steps provided only in the outer walls restrains widening deformation and appropriately provides the effect of the first aspect of the invention, namely appropriately improves flexural strength.

In the third aspect of the invention, the cross-sectional shape is symmetric with respect to the valley floor, and at least in the middle section of the length, the depth d of the valley floor is in the range of 45-100% of the height H of the ridges. Accordingly, the steps provided only in the outer walls restrains widening deformation and appropriately provides the effect of the first aspect of the invention, namely appropriately improves flexural strength.

BRIEF DESCRIPTION OF THE DRAWINGS

FIG 1 is a schematic plan view of a vehicle bumper reinforcement according to an embodiment of the present invention which has been mounted on a car, as viewed from above.

FIG 2 is an enlarged plan view of the left half (the right half of the vehicle) of the vehicle bumper reinforcement in FIG. 1.
FIG 3 is a front view of the vehicle bumper reinforcement in FIG 2 as viewed from the bottom of FIG 2, i.e. from the front side of the vehicle.
FIG 4 is a view of a vehicle bumper reinforcement as viewed in the direction of arrow IV in FIG 2.
FIG 5 is a view of a vehicle bumper reinforcement as viewed in the direction of arrow V in FIG 2.
FIG 6 shows sectional views of an example of a cross-sectional shape of a conventional vehicle bumper reinforcement, illustrating deflection that is caused by an impact force F.
FIG 7 shows sectional views illustrating widening deformation that is caused by an impact force F in the case where ridges of the vehicle bumper reinforcement of FIG 6 have a step in their walls.

MODES FOR CARRYING OUT THE INVENTION

The present invention may be preferably applied to vehicle bumper reinforcements, but also to other car structural members such as a center pillar and a rocker arm. The vehicle bumper reinforcement may be used for both bumpers in the front and rear sides of a vehicle, but may be applied to only the bumpers that are mounted in the front side of vehicles or the bumpers that are mounted in the rear side of vehicles. In a preferred embodiment, the longitudinal shape of the bumper reinforcement, as viewed in plan from above the vehicle, may have a curvature such that the bumper reinforcement is curved in the middle section of its length toward the outside of the car. Alternatively, the longitudinal shape of the bumper reinforcement may be substantially linear. The curvature may be an arc that is smoothly curved along the entire length. Alternatively, the longitudinal shape of the bumper reinforcement may be linear with only the ends angled toward inside the vehicle body, or may be generally curved with straight segments connected together. The longitudinal shape of the bumper reinforcement can be implemented in various forms.

The car structural member is shaped to have a substantially M-shaped cross section by bending, drawing or otherwise press-shaping a single metal sheet. The flanges extending from the outer ends of the ridges may extend toward the inside of the M-shape, i.e. toward each other, or may extend to the outside of the M-shape, i.e. away from each other. Such a car structural member is operable to receive external impact forces and to absorb and reduce the impact through bending or other deformation. Such a car structural member has an improved flexural strength and impact absorption capability as compared to those having a simple U-shaped cross section.

The outer wall in the outer side of each ridge may have either one or more steps. For example, the steps are positioned so as to substantially equally divide the outer wall in the height of the ridge. Accordingly, in embodiments with only one step in each ridge, the step may be positioned at a height from the flange within the range of about 40-60% of the height H of the ridge, so as to substantially bisect the outer wall in the height of the ridge. The steps may be such as to decrease or increase the width of the M-shaped cross section toward the tops of the ridges. In a preferred embodiment the steps in the ridges may be symmetric.

For example, in a preferred embodiment, the outer and inner walls of each of the ridges may be tilted

**EP 3 156 287 A1**

to the inside of the ridge toward the top of the ridge. Alternatively, at least one of the outer and inner walls of each ridge may be substantially parallel to the height of the ridge. In the second aspect of the invention, the tilt angles $\alpha_1$, $\alpha_2$ of the outer walls are both within the range of 0-20°, while in the first aspect of the invention, the tilt angles $\alpha_1$, $\alpha_2$ may be out of this range. The tilt angles $\alpha_1$, $\alpha_2$ may be either the same as or different from each other. For example, the tilt angle $\beta$ of the inner walls is appropriately in the range of 0-15°, and preferably equal to or smaller than the tilt angle $\alpha_1$. In the third aspect of the invention, the cross-sectional shape is symmetric with respect to the valley floor, and at least in the middle section of the length, the depth d of the valley floor is in the range of 45-100% of the height H of the ridges. Alternatively, in the first aspect of the invention, the cross-sectional shape may be asymmetric with respect to the valley floor, and the depth d of the valley floor may be less than 45% of the height H. The height H of the ridges and the depth d of the valley floor may be substantially constant along the entire length of the car structural member. Alternatively, for example, the height H and the depth d may continuously, smoothly decrease from the middle section of the length toward the longitudinal ends.

Embodiments

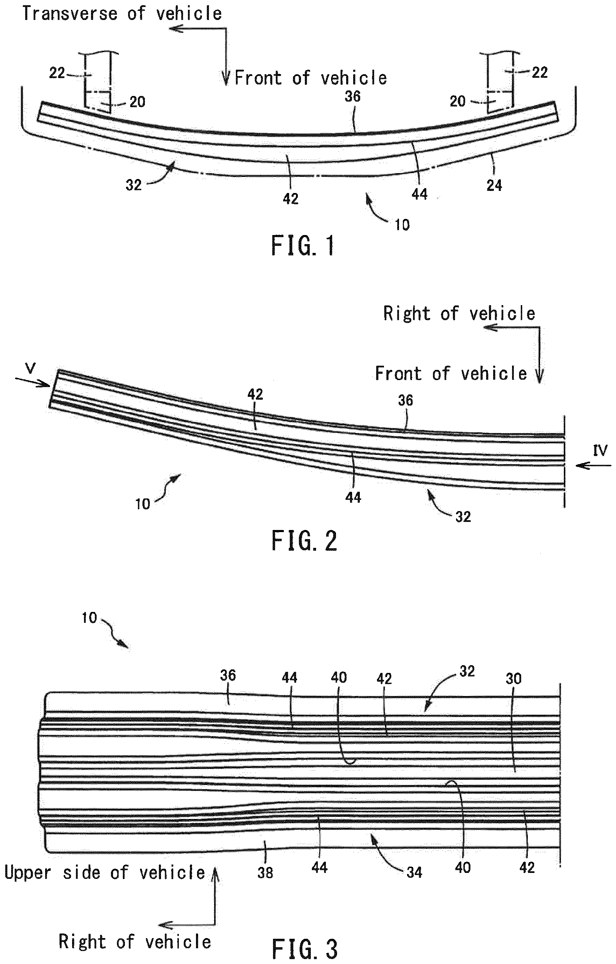

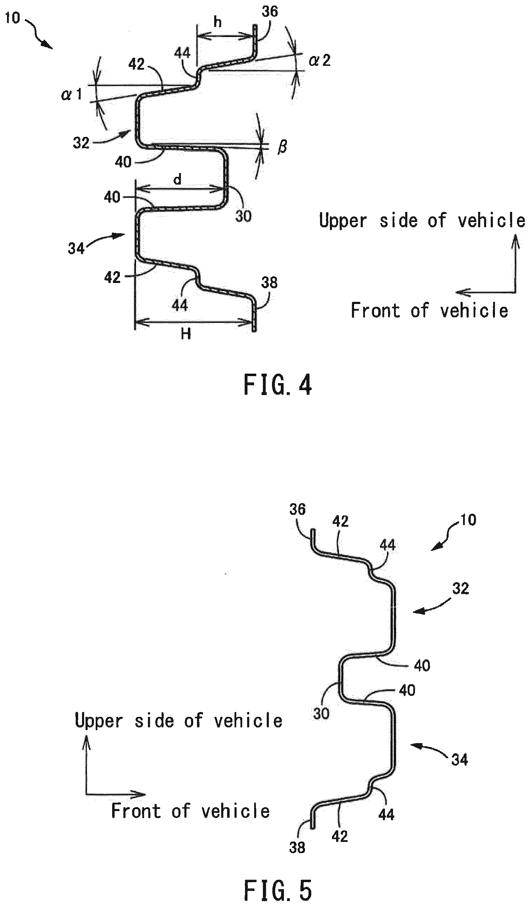

Embodiments of the present invention will be described in detail below with reference to the accompanying drawings. FIG 1 is a schematic plan view of a vehicle bumper reinforcement 10, as mounted in a car and viewed from above the car, according to an embodiment of the present invention. FIG 2 is an enlarged plan view of the left half of the vehicle bumper reinforcement 10 (in the right half of the vehicle). FIG 3 is a front view of a vehicle bumper reinforcement as viewed from the lower side of FIG 2, namely from the front side of the vehicle. FIG 4 is a view of a vehicle bumper reinforcement as viewed in the direction of arrow IV in FIG 2, namely a cross section of the middle section of the length of the vehicle bumper reinforcement 10. FIG 5 is a view of a vehicle bumper reinforcement as viewed in the direction of arrow V in FIG 2, namely an end view of a longitudinal end. The vehicle bumper reinforcement 10 may be manufactured from a single rectangular metal sheet. In an embodiment, the vehicle bumper reinforcement 10 is manufactured from a sheet of steel for hot press forming, which is bent into a desired shape in a hot press forming process and then hardened by quenching to have a high tensile strength of 1,400 MPa or higher. The metal sheet may have a thickness of about 1.6 mm.

The vehicle bumper reinforcement 10 has a length, which extends in the vehicle transversely, or horizontally as seen in FIG 1. The vehicle bumper reinforcement 10 has a smooth curvature such that the middle section of its length (i.e. the dimension of the reinforcement transverse to the vehicle) is curved toward the front of the vehicle as viewed in plan in FIG 1. The vehicle bumper reinforcement 10 is symmetric with respect to the center in the dimension transverse of the vehicle. The vehicle bumper reinforcement 10 is fixedly supported at the end sections of its dimension transverse to the vehicle by right and left side members 22 which are vehicle body components through bumper stays 20. A bumper 24 of synthetic resin is disposed outside, or in the front, of the bumper reinforcement 10.

As can be seen from FIG 4, the vehicle bumper reinforcement 10 in the middle section of its length generally includes a pair of ridges 32, 34 vertically spaced from each other with a valley floor 30 therebetween, and flanges 36, 38 at the outer ends of the ridges 32, 34, such that the vehicle bumper reinforcement 10 has a substantially M-shaped cross section. The vehicle bumper reinforcement 10 is disposed in the car in such an attitude that the ridges 32, 34 (projecting to the left in FIG 4) project toward the outside, or in an embodiment the front, of the car. This cross-section may be symmetric with respect to the valley floor 30. The depth d of the valley floor 30 is in the range of 45-100% of the height H of the ridges, and in an embodiment about 76%. The flanges 36, 38 may extend toward the outside of the M-shape, namely away from each other, so that the upper flange 36 extends upward and the lower flange 38 extends downward.

The two ridges 32, 34 include four walls, of which the two inner walls 40 adjacent to the valley floor 30 are flat while the two outer walls 42 in the outer sides each have a step 44 in the middle of the height of the ridges 32, 34. Each step 44 may substantially bisect the outer wall 42 in the height of the ridge 32, 34, and may be positioned at a height h from the flange 36, 38 within the range of 40-60% of the height H of the ridge 32, 34, and, in an embodiment, about 53%. For each of the ridges 32, 34, the tilt angle $\alpha_1$ of the higher section of the outer wall 42 with respect to the step 44 and the tilt angle $\alpha_2$ of the lower section of the outer wall 42 with respect to the step 44 may both be in the range of 0-20°, and, in an embodiment, are about 7°, where the tilt angles are defined as positive if the outer wall 42 is tilted inward toward the top of the ridge 32, 34. The tilt angle $\beta$ of the inner walls 40 of the ridges 32, 34 may be in the range of 0-15°. The tilt angle $\beta$ may be equal to or smaller than the tilt angle $\alpha_1$, and, in an embodiment, is about 5°. In an embodiment, the steps 44 are symmetric and such that the width (i.e. the vertical dimension as seen in FIG 4) of the M-shaped cross section decreases toward the tops of the ridges 32, 34, that is, the M-shaped cross section has a larger width at the flange 36, 38.

As clearly shown in FIG. 2, FIG 4 which shows the cross-sectional view of the middle section of the length, and FIG 5 which shows the end view of one longitudinal end, the height H of the ridges 32, 34 is the largest in the middle section of the length and continuously, smoothly decreases toward the longitudinal ends. The elevation of the valley floor 30 from the flange 36, 38 is substantially constant along the entire length, and the depth d of the valley floor 30 decreases as the height H of the ridges 32, 34 decreases. The height h of the steps 44 from the flanges 36, 38 is substantially constant along the entire length.

In such a vehicle bumper reinforcement 10 of the described embodiments, the outer walls 42 of the ridges 32, 34 have the step 44 and therefore have increased rigidity, while the inner walls 40 of the ridges 32, 34 are flat and therefore have a lower rigidity. This difference in rigidity between the inner and outer walls 40, 42 restrains widening deformation of the outer walls 42. When receiving an impact force applied from the side into which the ridges 32, 34 project in the event of a vehicle collision, the outer walls 42 are not widened but deflected under a larger load. The vehicle bumper reinforcement 10 thus has an improved flexural strength. The vehicle bumper reinforcement 10 therefore can appropriately bear impact forces and can absorb or reduce impact by bending or other deformation.

Since of the tilt angles $\alpha_1$, $\alpha_2$ of the outer walls 42 of the ridges 32, 34 are both about 7°, the steps 44 only in the outer walls 42 restrains widening deformation and appropriately improves flexural strength.

The cross-section is symmetric with respect to the valley floor 30, and the vehicle bumper reinforcement 10 in the middle section of its length has the depth d of the valley floor 30 of about 76% of the height H of the ridges 32, 34. Accordingly, the step 44 only in the outer walls 42 restrains widening deformation and appropriately improves flexural strength.

Although embodiments of the present invention is described above in detail with reference to the drawings, the embodiments are by way of example only and therefore the present invention can be embodied in various modified and improved forms using knowledge of those skilled in the art.

Description of the Reference Numerals

| 10: | Vehicle bumper reinforcement (Car structural member) |
|-----|------------------------------------------------------|
| 30: | Valley floor |
| 32,34: | Ridges |
| 36, 38: | Flanges |
| 40: | Inner Walls |
| 42: | Outer Walls |
| 44: | Steps |
| H: | Height of ridge |
| d: | Depth |
| $\alpha_1$, $\alpha_2$: | Tilt angle of outer wall |

Claims

1. A car structural member, manufactured from a single metal sheet and having a length, the structural member comprising a pair of ridges with a valley floor therebetween, and flanges at the outer ends of the ridges so that the structural member generally has a substantially M-shaped cross section perpendicular to the length, wherein the structural member is disposed on a car in such an attitude that the ridges project outward, and wherein the member is supported at its end sections of the length by the car, **characterized in that** the ridges include four walls of which two inner walls adjacent to the valley floor are flat while two outer walls on the outer sides of the ridges each have a step in the middle of the height of the ridges.

2. The car structural member of claim 1, **characterized in that** for each of the ridges, a tilt angle $\alpha1$ of an higher section of the outer wall with respect to the step and a tilt angle $\alpha2$ of a lower section of the outer wall with respect to the step are in the range of 0° to 20°, where said tilt angles are defined as positive if the outer wall is tilted inward toward the tops of the ridges.

3. The car structural member of claims 1 or 2, **characterized in that** the cross section is symmetric with respect to the valley floor, and at least in the middle section of the length the valley floor lies at a depth d in a range corresponding to 45-100% of the height H of the ridges.

4. The car structural member of any one of claim 1 to 3, **characterized in that** the car structural member is a bumper reinforcement, and has a curvature such that the car structural member is curved in the middle section of the length toward the outside of the car.

Transverse of vehicle

↓ Front of vehicle

22 — 20

36

20 — 22

32

42

44

24

10

## FIG. 1

Right of vehicle

Front of vehicle ↓

V

42

36

IV

10

44

32

## FIG. 2

10

36   44   40   42   32   30

38   44   34   40   42

Upper side of vehicle ↑

Right of vehicle

## FIG. 3

FIG. 4

Upper side of vehicle

Front of vehicle

FIG. 5

Upper side of vehicle

Front of vehicle

(a) Initial shape      (b) Impact force applied

104  102

100

F

104    102

Deflected  Deflected

100

FIG. 6

(a) Initial shape      (b) Impact force applied

104  102

106  106  106

106

100

F

104    102

106  Widened  106

Widened  100  Widened

FIG. 7

## INTERNATIONAL SEARCH REPORT

| International application No. |
|---|
| PCT/JP2015/051741 |

**A. CLASSIFICATION OF SUBJECT MATTER**
*B60R19/04*(2006.01)i

According to International Patent Classification (IPC) or to both national classification and IPC

**B. FIELDS SEARCHED**

Minimum documentation searched (classification system followed by classification symbols)
B60R19/04

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2003/0227182 A1  (OM CORP.),<br>11 December 2003 (11.12.2003),<br>paragraphs [0050] to [0054]; fig. 3<br>& JP 2004-9917 A        & DE 10324868 A1 | 1-2<br>3-4 |
| X<br>Y | DE 102006062163 A1  (BENTELER AUTOMOBILTECHNIK<br>GMBH),<br>26 June 2008 (26.06.2008),<br>paragraphs [0022] to [0026]; fig. 1<br>(Family: none) | 1-2<br>4 |
| X<br>Y | WO 1998/011267 A1  (BENSON, Peter),<br>19 March 1998 (19.03.1998),<br>description, page 2, line 10 to page 3, line 2;<br>fig. 3 to 4<br>& SE 509617 C2        & AU 4227997 A | 1-2<br>4 |

☒  Further documents are listed in the continuation of Box C.          ☐  See patent family annex.

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>    08 April 2015 (08.04.15) | Date of mailing of the international search report<br>    21 April 2015 (21.04.15) |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/051741

C (Continuation). DOCUMENTS CONSIDERED TO BE RELEVANT

| Category* | Citation of document, with indication, where appropriate, of the relevant passages | Relevant to claim No. |
|---|---|---|
| X | WO 1994/007709 A1 (PLANNJA HARDTECH AB), 14 April 1994 (14.04.1994), description, page 4, line 28 to page 8, line 12; fig. 1 to 3, 4E & JP 8-502003 A & JP 2004-8 U & US 5600931 A & EP 662053 A1 & SE 501812 C2 & AU 5122093 A | 1-2 |
| Y | US 6406081 B1 (GENERAL ELECTRIC CO.), 18 June 2002 (18.06.2002), fig. 3 & JP 2004-535322 A & WO 2002/074585 A1 & EP 1373024 A1 & CN 1500044 A & HK 1066196 A1 & KR 10-0843830 B1 & AU 2002240451 B2 | 4 |

Form PCT/ISA/210 (continuation of second sheet) (July 2009)

**EP 3 156 287 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007038756 A

- JP 2004009917 A